## Europäisches Patentamt
## European Patent Office
## Office européen des brevets

(19)

(11) Veröffentlichungsnummer: **0 464 661 A1**

(12) # EUROPÄISCHE PATENTANMELDUNG

(21) Anmeldenummer: **91110644.1**

(22) Anmeldetag: **27.06.91**

(51) Int. Cl.⁵: **B01D 53/00**

(30) Priorität: **03.07.90 DE 9010082 U**

(43) Veröffentlichungstag der Anmeldung:
**08.01.92 Patentblatt 92/02**

(84) Benannte Vertragsstaaten:
**AT BE CH DE DK ES FR GB GR IT LI NL SE**

(71) Anmelder: **Hebel Alzenau GmbH & Co.**
**Brentanostrasse 2**
**W-8755 Alzenau(DE)**

(72) Erfinder: **Bothe, Hans-Günther, Dr.**
**Brahms Strasse 8**
**W-6308 Butzbach(DE)**

(74) Vertreter: **Liebau, Gerhard, Dipl.-Ing.**
**Birkenstrasse 39**
**W-8900 Augsburg 22(DE)**

(54) **Biologische Abgasreinigungsanlage, insbesondere Abluftreinigungsanlage.**

(57) Bei einer biologischen Abgasreinigungsanlage wird das zu reinigende Abgas durch ein Festbett (Biobett) aus Mikroorganismen enthaltendem Nährbodenmaterial bei Anwesenheit einer vorbestimmten Luftfeuchte geleitet. Das Biobett enthält eine Mischung aus Nährbodenmaterial und Porenbetongranulat im volumenmäßigen Verhältnis 5 : 1 bis 1 : 5 und mit Korngrößen von etwa 2 bis 25 mm.

EP 0 464 661 A1

Die Erfindung betrifft eine biologische Abgasreinigungsanlage, insbesondere Abluftreinigungsanlage, bei welcher das zu reinigende Abgas durch ein Festbett (Biobett) aus Mikroorganismen enthaltendem Nährbodenmaterial bei Anwesenheit einer vorbestimmten Luftfeuchte geleitet wird.

Industrielle, organisch belastete Abgase, die den Kriterien großer Mengen kleiner Schadstoffkonzentrationen und biologischer Abbaubarkeit derselben genügen, kommen für die biologische Abgasreinigung in Betracht. Die Schadstoffkonzentrationen solcher Abgase lassen keine selbskatalytische, autotherme (d.h. ohne Stützfeuerung) Verbrennung und wegen der Anlagendimensionierung auch keine Adsorption an Aktivkohle zu.

Aus diesem Grund verwendet man zur Reinigung derartiger industrieller, organisch belasteter Abgase biologische Abgasreinigungsanlagen der eingangs erwähnten Art, bei denen man die Abgase durch das Mikroorganismen enthaltende Biobett leitet. In dem Biobett erfolgt durch die Mikroorganismen der biologische Schadstoffabbau. Die Aufgabe des Biobettes besteht in der Biokompatibilität seiner Inhaltsstoffe, in der Pufferung von pH-Wertschwankungen und in der Stabilität seines Aufbaues, um definierte Abgasverweilzeiten zu erhalten. Durch eine vorbestimmte Luftfeuchte wird die Biozönose in dem Biobett aufrechterhalten. Das Biobett in einer derartigen Abgasreinigungsanlage, auch Bioreaktor genannt, enthält derzeit als Nährbodenmaterial für die Mikroorganismen hauptsächlich Rindenmulch oder auch Torf und kann zusätzlich auch mit Schichtenreisig ausgestattet werden, wobei letzteres hauptsächlich zur Lockerung des Biobettes und Erhöhung der Gasdurchlässigkeit vorgesehen ist. Die Lebensdauer eines derartigen Biobettes liegt z.Zt. bei etwa zwei Jahren. Infolge der Tätigkeit der Mikroorganismen wird das Nährbodenmaterial allmählich so zersetzt, daß das Biobett ähnlich wie ein Komposthaufen in sich zusammensinkt. Hierdurch wird der Strömungswiderstand erhöht. Um den gleichen Abgasdurchsatz zu erreichen, muß der Druck, mit dem das Abgas durch das Biobett geleitet wird, erhöht werden. Es ergibt sich hierdurch eine höhere Strömungsgeschwindigkeit bei verringerter Biobetthöhe, damit eine geringere Verweilzeit des Abgases im Biobett und hierdurch auch eine schlechtere Reinigungswirkung. Ferner kann durch Betriebsstörungen oder bei ungenügender Leistung der Luftbefeuchtigungsanlage, mit der die Abgase vor dem Eintritt in das Biobett auf die erforderliche Luftfeuchte gebracht werden, das Biobett austrocknen und hierdurch die in ihm enthaltenen Mikroorganismen zumindest teilweise abgetötet werden. Auch ein Zuviel an Abgasen kann zu einer Abtötung von Mikroorganismen führen. Die Abtötung von Mikroorganismen hat wiederum eine verringerte Reinigungswirkung zur Fol

ge und kann bis zum Totalausfall der biologischen Reinigung führen.

Der Erfindung liegt daher die Aufgabe zugrunde, eine biologische Abgasreinigungsanlage, insbesondere Abluftreinigungsanlage, der eingangs erwähnten Art zu schaffen, bei der das Biobett eine hohe Lebensdauer mit gleichbleibend guter Reinigungswirkung und Gasdurchlässigkeit aufweist.

Dies wird nach der Erfindung dadurch erreicht, daß das Biobett eine Mischung aus Nährbodenmaterial und Porenbetongranulat im volumenmäßigen Verhältnis 5 : 1 bis 1 : 5 und mit Korngrößen von etwa 2 bis 25 mm enthält.

Das Porenbetongranulat hat im Biobett eine vielfache Funktion. Es stabilisiert die Bettstruktur, d.h. das Zusammensinken des Bettes wird verhindert bzw. zumindest verringert. Es bleiben damit die Betthöhe und die Gasdurchlässigkeit des Biobettes bzw. der Strömungswiderstand desselben im wesentlichen konstant, so daß sich auch nach längerer Betriebszeit die Reinigungswirkung nicht verringert. Das Porenbetongranulat schafft im Biobett zusätzlichen Siedlungs- und Reaktionsraum für die Mikroorganismen. Da Porenbetongranulat ferner in der Lage ist, große Mengen von Feuchtigkeit zu speichern und im Bedarfsfalle wieder abzugeben, verhindert es bei Betriebsstörungen oder ungenügender Befeuchtung der zu reinigenden Abgase ein Austrocknen des Biobettes. Porenbetongranulat ist aufgrund seiner adsorptiven Eigenschaften in der Lage, Spitzen der Schadstoffkonzentration abzupuffern und so die Mikroorganismen vor einem Zuviel an "Futter" zu bewahren. Schließlich verhindert das Porenbetongranulat durch seine leicht basische Reaktion eine Übersäuerung des Biobettes.

Vorteilhafte Ausgestaltungen der Erfindung sind in den Unteransprüchen gekennzeichnet.

Die Erfindung wird in folgendem, anhand eines in der Zeichnung dargestellten Ausführungsbeispieles, näher erläutert. Es zeigen:

Figur 1    die Prinzipzeichnung einer Abgasreinigungsanlage,

Figur 2    den Aufbau eines vorteilhaften Bioreaktors im Horizontalschnitt.

Aus einer Werkshalle 1 oder dgl. wird mittels des Ventilators 2 Schadstoffe enthaltende Abluft abgesaugt. Diese durchströmt einen Luftbefeuchter 4, in welchem die Abluft auf eine vorbestimmte, den biologischen Schadstoffabbau besonders begünstigende Luftfeuchte gebracht wird. Durch geeignete bekannte Einrichtungen wird außerdem dafür gesorgt, daß die Temperatur und der Druck der Abluft im wesentlichen konstant gehalten wird, bevor die Abluft in einen Luftverteiler 4 einströmt. Von dem Luftverteiler strömt die Abluft durch einen, den Bioreaktor 5 nach unten abgrenzenden, gasdurchlässigen Boden 6, z.B. einem sogenannten Spaltenboden.

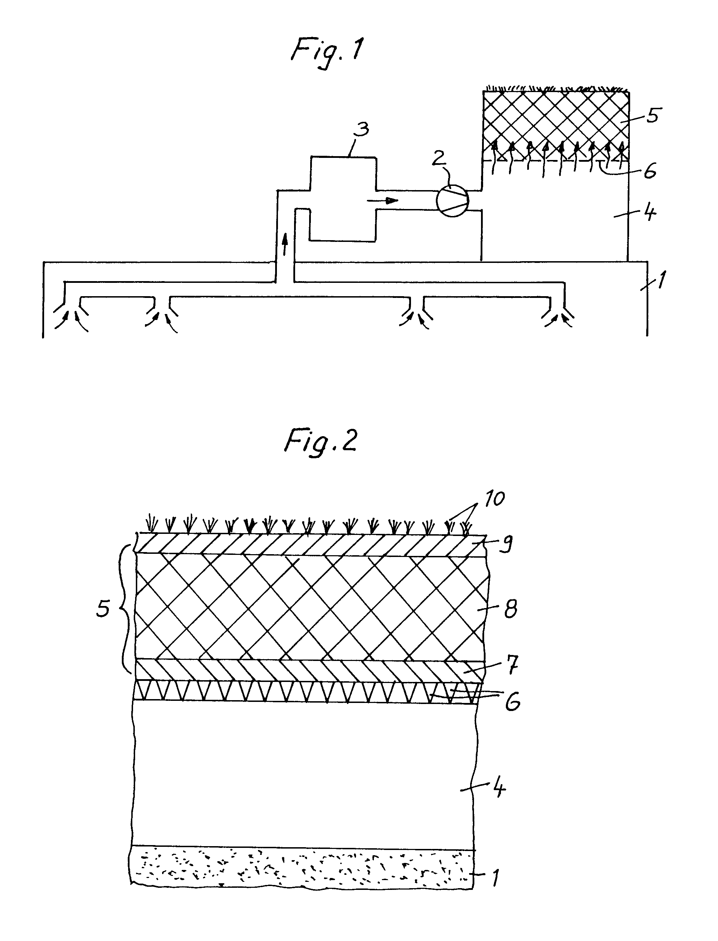

Der Aufbau des Bioreaktors 5 ist als Beispiel in Figur 2 dargestellt, wobei auch andere Aufbauten denkbar sind. Entscheidend ist lediglich, daß der Bioreaktor ein Festbett oder Biobett aufweist, bestehend aus Nährbodenmaterial für Mikroorganismen und die im Nährbodenmaterial angesiedelten Mikroorganismen selbst. Das Biobett muß außerdem eine ausreichende Gasdurchlässigkeit aufweisen, damit das Abgas oder die Abluft mit einer vorbestimmten Verweildauer im Biobett dieses durchströmt und dann nach oben aus dem Biobett austritt.

Bei dem in Figur 2 dargestellten Ausführungsbeispiel ist über dem Luftverteiler 4 ein Spaltenboden 6 vorgesehen. Auf dem Spaltenboden ist eine Basisschicht 7 angeordnet. Diese Basisschicht 7 kann aus reinem Nährbodenmaterial, wie z.B. grobem Rindenmulch mit Stückgrößen von 20 - 100 mm, oder auch Torf bestehen.

Vorteilhaft ist es auch, wenn die Basisschicht 7 aus Porenbetongranulat mit einer Korngröße von bis zu etwa 25 mm besteht. Die kleinste Korngröße richtet sich nach der Spaltbreite des Spaltbodens 6 und muß größer sein als die Spaltbreite, da sonst zumindest ein Teil des Porenbetongranulats durch den Spaltboden fällt oder diesen verstopft. Wenn Porenbetongranulat als Basisschicht verwendet wird, dann dient das Porenbetongranulat auch als Konzentrationspuffer. Die Basisschicht 7 kann etwa 100 mm hoch sein.

Über der Basisschicht 7 ist eine Hauptschicht 8 in einer Schichthöhe von beispielsweise etwa 500 mm angeordnet. In dieser Hauptschicht sind die Mikroorganismen angesiedelt und hier findet auch im wesentlichen die biologische Abgas- oder Abluftreinigung statt. Die Hauptschicht 8 enthält eine Mischung aus Nährbodenmaterial und Porenbetongranulat mit Korngrößen im wesentlichen von 2 bis 25 mm, vorzugsweise im wesentlichen von 4 bis 8 mm. Als Nährbodenmaterial kann z.B. Rindenmulch in Stückgrößen bis zu 30 mm oder gegebenenfalls auch Torf verwendet werden. Auch andere bekannte Nährbodenmaterialien gemischt mit Porenbetongranulat sind möglich.

Um die Entwicklung und Tätigkeit der Mikroorganismen zu begünstigen, sollte das Porenbetongranulat einen pH-Wert unter 9, vorzugsweise bei etwa 7 bis 8, aufweisen. Da Porenbetongranulat aus normalem Porenbeton, insbesondere Gasbeton, wie er in der Bauindustrie verwendet wird, einen höheren pH-Wert aufweist, ist es zweckmäßig, den pH-Wert des Porenbetongranulats vor dessen Verwendung für den vorgesehenen Zweck durch Waschen, $CO_2$-Begasung oder Säurebehandlung abzusenken.

Die Mischung aus Nährbodenmaterial und Porenbetongranulat in der Hauptschicht 8 sollte volumensmäßig im Verhältnis 5 : 1 bis 1 : 5, vorzugsweise 4 : 2 bis 2 : 4, bestehen. Auch ein Mischungsverhältnis 1 : 1 kann vorteilhaft sein.

Eine Möglichkeit, die Mischung aus Nährbodenmaterial und Porenbetongranulat herzustellen, besteht darin, daß man zunächst das Porenbetongranulat beispielsweise aus Abfällen, wie sie bei der Porenbetonherstellung als Baustoff entstehen, zerkleinert, die gewünschten Größen aussiebt, und dann mit Nährbodenmaterial mischt.

Um die Entwicklung der Mikroorganismen zu begünstigen, kann man das Gasbetongranulat auch mit einer Nährstofflösung tränken. Gegebenenfalls ist es auch denkbar, reines Gasbetongranulat mit dem angegebenen Korngrößenbereich nur mit Nährstofflösung für die Mikroorganismen zu tränken. Das die Nährstoffe enthaltende Porenbetongranulat selbst bildet dann den Nährboden für die Mikroorganismen.

Wenn man den Bioreaktor zur Platzeinsparung beispielsweise auf einem Flachdach anordnet, dann ist es zweckmäßig, über der Hauptschicht 8 eine Deckschicht 9 von beispielsweise 100 mm Höhe aus reinem Porenbetongranulat anzuordnen. Diese Deckschicht 9 verhindert zusätzlich eine Austrocknung der Hauptschicht 8. Die Korngröße des Porenbetongranulats in der Deckschicht sollte im wesentlichen von 0,5 bis 8 mm, vorzugsweise 0,5 bis 3,5 mm, betragen.

Die Deckschicht 9 wird vorteilhaft als Pflanzschicht für eine Begrünung 10, insbesondere für Rasen, verwendet. In der DE 39 12 872 C1 ist ein vorteilhaftes Verfahren zur Begrünung von Dachflächen, insbesondere Flachdächern, beschrieben, welches inbesondere für die Begrünung einer aus Porenbeton bestehenden Pflanzschicht geeignet ist.

**Patentansprüche**

1. Biologische Abgasreinigungsanlage, insbesondere Abluftreinigungsanlage, bei welcher das zu reinigende Abgas durch ein Festbett (Biobett) aus Mikroorganismen enthaltendem Nährbodenmaterial bei Anwesenheit einer vorbestimmten Luftfeuchte geleitet wird, **dadurch gekennzeichnet**, daß das Biobett (5, 8) eine Mischung aus Nährbodenmaterial und Porenbetongranulat im volumenmäßigen Verhältnis 5 : 1 bis 1 : 5 und mit Korngrößen von etwa 2 bis 25 mm enthält.

2. Anlage nach Anspruch 1, **dadurch gekennzeichnet**, daß die Mischung aus Nährbodenmaterial und Porenbetongranulat volumenmäßig im Verhältnis 4 : 2 bis 2 : 4 besteht.

3. Anlage nach Anspruch 1 oder 2, **dadurch gekennzeichnet**, daß die Mischung volumenmä- ßig zur Hälfte aus Nährbodenmaterial und zur anderen Hälfte aus Porenbetongranulat besteht.

4. Anlage nach mindestens einem der Ansprüche 1 - 3, **dadurch gekennzeichnet**, daß das Porenbetongranulat Korngrößen von etwa 4 bis 8 mm aufweist.

5. Anlage nach mindestens einem der Ansprüche 1 - 4, **dadurch gekennzeichnet**, daß das Porenbetongranulat mit Nährstofflösung für die Mikroorganismen getränkt ist.

6. Anlage nach mindestens einem der vorhergehenden Ansprüche, **dadurch gekennzeichnet**, daß das Porenbetongranulat einen abgesenkten pH-Wert unter 9, vorzugsweise etwa 7 - 8, aufweist.

7. Anlage nach mindestens einem der Ansprüche 1- 6, **dadurch gekennzeichnet**, daß das Biobett (5) eine unterste Basisschicht (7) von reinem Nährbodenmaterial oder reinem Porenbetongranulat und darüber eine Hauptschicht (8) aus einer Mischung aus Nährbodenmaterial und Porenbetongranulat aufweist.

8. Anlage nach Anspruch 7, **dadurch gekennzeichnet**, daß die Basisschicht (7) etwa 100 mm hoch ist.

9. Anlage nach Anspruch 7, **dadurch gekennzeichnet**, daß die Hauptschicht (8) etwa 500 mm hoch ist.

10. Anlage nach mindestens einem der Ansprüche 1 bis 9, **dadurch gekennzeichnet**, daß über der Mischung aus Nährbodenmaterial und Porenbetongranulat eine Deckschicht (9) aus reinem Porenbetongranulat vorgesehen ist.

11. Anlage nach Anspruch 10, **dadurch gekennzeichnet**, daß das Porenbetongranulat der Deckschicht (9) Korngrößen im wesentlichen von 0,5 bis 8 mm, vorzugsweise 0,5 bis 3,5 mm, aufweist.

12. Anlage nach Anspruch 10 oder 11, **dadurch gekennzeichnet**, daß die Deckschicht (9) etwa 100 mm hoch ist.

13. Anlage insbesondere nach Anspruch 1, **dadurch gekennzeichnet**, daß das Biobett (5) aus mit Nährstofflösung für die Mikroorganismen getränktem Porenbetongranulat mit Korngrößen im wesentlichen von 2 bis 25 mm besteht.

## Fig. 1

## Fig. 2

**Europäisches Patentamt**

**EUROPÄISCHER RECHERCHENBERICHT**

Nummer der Anmeldung

**EP 91 11 0644**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 423 285  (U.FUCHS)<br>* Seite 9, Zeile 24 - Seite 32; Ansprüche 1, 6; Figur 3 *<br>– – – | 1,5,13 | B 01 D 53/00 |
| A | EP-A-0 142 872  (CLAIR TECH B.V.)<br>* Ansprüche 1, 3, 10-14 *<br>– – – | 1,4,5 | |
| A | WO-A-8 603 689  (MENZOLIT-WERKE ALBERT SCHMIDT GMBH)<br>* Ansprüche 1-4, 10, 14; Figur 1 *<br>– – – – – | 1,3,7 | |

|  | RECHERCHIERTE SACHGEBIETE (Int. Cl.5) |
|---|---|
| | B 01 D |

Der vorliegende Recherchenbericht wurde für alle Patentansprüche erstellt

| Recherchenort | Abschlußdatum der Recherche | Prüfer |
|---|---|---|
| Berlin | 23 August 91 | BERTRAM H E H |